# FASCICULE DE BREVET EUROPEEN

(11) **EP 2 684 006 B1**
(45) Date de publication et mention de la délivrance du brevet: **10.04.2019**
(21) Numéro de dépôt: 12707612.3
(22) Date de dépôt: 08.03.2012
(51) Int. Cl.: G01B 5/28, F17C 13/02, G21C 17/017

(54) **DISPOSITIF DE MESURE DE L'ETAT DE SURFACE D'UNE SURFACE**
VORRICHTUNG ZUR VERMESSUNG DES OBERFLÄCHENZUSTANDES EINER OBERFLÄCHE
DEVICE FOR MEASURING THE SURFACE STATE OF A SURFACE

(30) Priorité: 10.03.2011 FR 1151963
(43) Date de publication de la demande: 15.01.2014
(73) Titulaire: Commissariat à l'Énergie Atomique et aux Énergies Alternatives, 75015 Paris (FR)
(72) Inventeur: GIRARD, Claude, F-21490 Clenay (FR)
(74) Mandataire: Ahner, Philippe
(86) Numéro de dépôt international: PCT/EP2012/054051
(87) Numéro de publication internationale: WO 2012/120100

(56) Documents cités:
- EP-A1- 2 199 732
- DE-A1-102009 035 747
- US-A- 2 772 565
- US-A1- 2004 221 465

## Description

### DOMAINE TECHNIQUE

L'invention se rapporte au domaine de la mesure de l'état de surface d'une surface et notamment à la détermination de sa rugosité de surface dans le but de qualifier cette même surface.

L'invention concerne plus particulièrement un dispositif de mesure de l'état de surface d'une surface.

La détermination de l'état de surface des surfaces est devenue une problématique d'importance en ce qui concerne les industries de pointe, telles que l'aéronautique, l'automobile ou encore la production d'énergie. En effet, l'état de surface, et plus particulièrement la rugosité de surface, détermine certaines des caractéristiques et des propriétés des surfaces, telles que leur tenue à la corrosion et à l'usure et leurs propriétés d'adhérence et de glissement.

Dans le domaine de la production d'énergie, tel que le nucléaire, cette problématique intervient notamment au niveau des conduites de gaz des installations de production d'énergie. L'état de surface de la surface interne de ces conduites à un impact important sur les pertes de charges. En effet, cet état de surface est l'une des caractéristiques principales qui déterminent le type d'écoulement des gaz qui transitent dans ces conduites. Ainsi, une surface interne de conduite présentant une forte rugosité à pour conséquence un écoulement en régime turbulent et donc présentant une forte perte de charge. Il est donc primordial de connaître, et le cas échéant corriger, l'état de surface des conduites de gaz.

### ÉTAT DE LA TECHNIQUE ANTÉRIEURE

La mesure de l'état de surface d'une surface est généralement réalisée à l'aide d'un dispositif du type profilomètre. Ce type de dispositif est classé en deux catégories distinctes, les profilomètres de contact et les profilomètres optiques.

Les profilomètres de contact comportent généralement une sonde destinée à être contact avec la surface, des moyens de contrainte de la sonde sur la surface, des moyens de mesures du déplacement de la sonde et des moyens de déplacement de la sonde le long de la surface. La sonde est généralement une pointe en matériau dure, tel que le diamant, présentant un diamètre de pointe de faible dimension.

Le principe de ce type de profilomètre consiste à déplacer la sonde le long de la surface par l'action des moyens de déplacement, une contrainte constante de la sonde sur la surface étant exercée par les moyens de contrainte pendant le déplacement. Lors de ce même déplacement, les moyens de mesure du déplacement de la sonde enregistrent les déplacements de la sonde suivant un axe perpendiculaire à la surface et permettent ainsi d'obtenir un profil de la surface. Ce profil, une fois traité, donne une information sur l'état de surface de la surface ainsi que sur sa rugosité de surface.

Les moyens de mesure du déplacement de la sonde peuvent employer des technologies capacitives, inductives, piézo-électriques ou encore optiques. Ce sont ces moyens de mesure du déplacement de la sonde, avec la surface de contact entre la sonde et la surface à mesurer, qui déterminent la résolution de ce type de profilomètre.

Ce type de profilomètre étant destiné à la mesure de surfaces planes, les moyens de déplacement de la sonde le long de la surface ne permettent pas de grandes amplitudes quant aux déplacements le long de l'axe perpendiculaire à la surface. Il en résulte qu'il n'est pas possible avec un tel type de profilomètre de mesurer l'état de surface d'une surface présentant une courbure importante. De même, s'il est possible d'effectuer ce type de mesure sur des surfaces présentant une faible courbure de surface, le profil obtenu présente alors un artefact lié à cette courbure qui nécessite une complexification du traitement informatique lors de la détermination de l'état de surface.

Les profilomètres de type optique mettent généralement à profit les propriétés de réflexion des surfaces à mesurer et emploient des méthodologies de mesure optique, telles que l'interférométrie, l'holographie ou la mesure confocale.

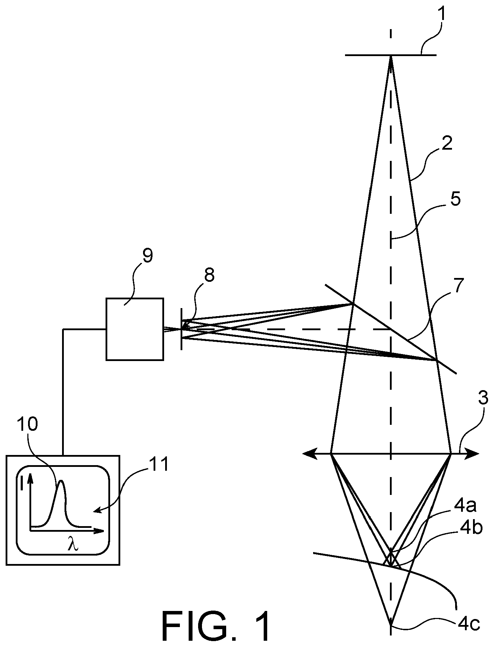

Cette dernière méthodologie, illustrée sur la figure 1, consiste à utiliser une source 1 polychromatique ponctuelle et à faire traverser le rayonnement lumineux 2 qui en est issu au travers d'un objectif 3 présentant un fort chromatisme axial. Il en résulte, avec un positionnement de la source 1 au foyer objet de l'objectif 3, un continuum d'images monochromatiques 4a, 4b et 4c uniformément réparties le long de l'axe optique 5 de l'objectif 3.

Lors de la mesure de l'état de surface d'une surface 6, la surface 6 est positionnée de manière à intercepter l'axe optique 5 et à réfléchir le rayonnement lumineux 2. Le rayonnement lumineux 2 ainsi réfléchi repasse au travers de l'objectif 3 et est dirigé, par réflexion sur une lame semi-réfléchissante 7, sur l'entrée 8 d'un spectromètre 9 disposé à une distance équivalente au foyer objet de l'objectif 3. Il en résulte que seule l'image monochromatique correspondant 4b à l'intersection entre la surface 6 et l'axe optique 5 est focalisée au niveau de l'entrée 8 du spectromètre 9. Cette focalisation est à l'origine d'un pic d'intensité 10 dans le spectre 11 optique mesuré par le spectromètre 9, la longueur d'onde de ce pic d'intensité 10 permettant de déterminer la distance de la surface 6 au niveau de l'intersection avec l'axe optique 5.

Ainsi, un balayage de la surface permet de fournir un profil de surface et de déterminer, après traitement, une information sur l'état de surface de la surface et de sa rugosité de surface.

Ce type de profilomètre, de manière à offrir une bonne résolution en hauteur, présente une profondeur de champ sur laquelle sont distribuées les images monochromatiques, réduite. Ceci limite les variations de hauteur mesurables, et donc les courbures de surface admissibles avec un tel type de profilomètre. Ce type de profilomètre ne permet donc pas de mesurer l'état de surface d'une surface présentant une courbure de surface importante.

Une méthodologie similaire est également employée dans des capteurs de déplacement à mesure confocale.

On notera qu'il est également connu des documents DE 102009035747 A1, EP 2199732 A1, US 2004/221465 A1 et US 2772565 A des dispositifs de mesure de la rugosité de surface.

### EXPOSÉ DE L'INVENTION

Un but de la présente invention est de fournir un dispositif de mesure de l'état de surface qui permette une mesure de l'état de surface d'une surface présentant une courbure de surface importante.

A cet effet, l'invention concerne un dispositif de mesure de l'état de surface d'une surface conforme à la revendication 1.

L'adaptation des moyens de déplacement relatif de la sonde pour déplacer la sonde relativement à la surface selon une trajectoire suivant la courbure de surface permet un déplacement de la sonde le long de la surface et donc de mesurer le profil tout au long de la courbure de surface. Cette adaptation permet également de limiter les artefacts liés à la courbure. En effet, les déplacements de la sonde le long de la courbure de surface étant réalisés au moyen des moyens de déplacement relatif, les déplacements mesurés par les moyens de mesure du déplacement de la sonde corresponde aux déplacements liés à la rugosité de surface sans interférence de la courbure de surface.

Les moyens de déplacement relatif peuvent être adaptés pour déplacer la sonde relativement à la surface selon une trajectoire uniquement circulaire sur un angle au moins égal à 100° et préférentiellement égal à 180°.

Le dispositif peut être destiné en particulier à la mesure de l'état de surface de la surface interne d'un tube présentant une forme sensiblement en portion de tore, les moyens de déplacement relatif étant adaptés pour déplacer relativement la sonde le long d'une génératrice interne du tube, ladite génératrice formant la courbure de surface.

On entend par génératrices d'un tore, l'ensemble des courbes circulaires dont le centre passe par l'axe du tore, qui sont perpendiculaires à ce même axe et qui génèrent la surface du tore.

Ainsi le dispositif permet une mesure de l'état de surface le long de la génératrice du tube, et donc, d'estimer les pertes de charges qui, dans ce même tube, pourraient être liées à la rugosité de surface.

Les moyens de déplacement relatif peuvent comporter une platine pour supporter le tube, la platine étant montée pivotante relativement à la sonde de manière à autoriser le déplacement relatif de la sonde le long de la génératrice.

Une telle platine permet un support et un déplacement adéquat du tube de manière à ce que la sonde puisse mesurer l'état de surface le long de la génératrice interne du tube.

Le montage pivotant de la platine peut être motorisé, préférentiellement avec un déplacement indexé.

Un tel pivotement motorisé de la platine permet une automatisation de la mesure, la précision de cette dernière pouvant être optimisée par l'indexation du déplacement.

Le dispositif peut comporter en outre un bras comportant une extrémité libre supportant la sonde, le bras présentant une courbure identique à celle de la portion de tore de manière à autoriser le déplacement relatif de la sonde le long de la génératrice.

Un tel bras, de par sa courbure identique à la courbure du tore, permet un support simple de la sonde en limitant les risques d'interaction entre la sonde, et les câblages qui y sont reliés, avec les parois du tube.

Il peut être en outre prévu un moyen de rotation de la sonde adapté pour déplacer la sonde en rotation le long de la surface interne du tube de manière à changer la génératrice le long de laquelle la sonde est déplacée relativement par les moyens de déplacement relatif.

Un tel moyen de pivotement permet de déplacer transversalement la sonde le long de la surface interne autorisant ainsi la mesure de l'état de surface du tube le long de plusieurs génératrices de ce même tube.

Les moyens de mesure du déplacement peuvent comporter un capteur de déplacement du type optique, le capteur étant préférentiellement un capteur de déplacement à mesure confocale.

Un tel capteur de déplacement possède un faible encombrement volumique tout en offrant une résolution adéquate pour mesurer la rugosité le long de la génératrice du tube.

Selon une première variante de réalisation, les moyens de contrainte peuvent comporter un levier monté pivotant et au bout duquel est disposé la sonde, le levier comportant une masselotte de manière à contraindre la sonde sur la surface par l'action de la gravité, la masselotte étant préférentiellement déplaçable le long du levier.

Une telle masselotte, en combinaison avec un levier, permet de fournir des moyens de contrainte présentant un réglage simple et précis des contraintes appliquées à la sonde.

Selon une autre variante de réalisation, les moyens de contrainte peuvent comporter un moyen de rappel élastique agencé pour appliquer une force de rappel sur la sonde de façon à contraindre la sonde sur la surface

De tels moyens de contrainte permettent d'appliquer des contraintes sur la sonde dont la direction n'est pas imposée par la gravité.

Le bras peut comporter à son extrémité libre une portion pivotante, la portion pivotante étant agencée pour pivoter autour d'un axe tangentiel à la courbure du bras et la sonde étant supportée par ladite portion pivotante.

Une telle portion pivotante autorise, lors de la mesure le long d'une génératrice quelconque du tube, un placement adéquat de la sonde pour permettre la mesure le long de cette génératrice.

Les moyens de contrainte peuvent comporter en outre un moyen de contrôle de la contrainte de la sonde sur la surface.

Un tel moyen de contrôle permet de connaître précisément la contrainte appliquée à la sonde tout au long de la mesure de l'état de surface de la surface.

Le dispositif peut comporter en outre un moyen de désengagement agencé pour éloigner la sonde de la surface.

Un tel moyen de désengagement permet d'éloigner la sonde de la surface lors des déplacements de la surface qui ne sont pas liés à une mesure d'état de surface.

Les moyens de contrainte peuvent comporter un levier monté pivotant au bout duquel est montée la sonde, et le moyen de désengagement est formé par un système de basculement du levier.

Un tel système de basculement du levier permet de fournir un moyen de désengagement simple et robuste.

Le système de basculement peut comporter un manipulateur micrométrique préférentiellement du type piézo-électrique.

Un tel manipulateur micrométrique permet une commande précise du désengagement de la sonde.

### BRÈVE DESCRIPTION DES DESSINS

La présente invention sera mieux comprise à la lecture de la description d'exemples de réalisation, donnés à titre purement indicatif et nullement limitatif, en faisant référence aux dessins annexés sur lesquels :
- la figure 1, issue du site internet de la société STIL S.A. [1], illustre la méthodologie de mesure de distance de type confocale utilisée dans certains profilomètres optiques et dans les capteurs de déplacement à mesure confocale,
- la figure 2 illustre une forme de réalisation d'un dispositif de mesure selon l'invention,
- la figure 3 illustre la tête de mesure d'un dispositif de mesure selon cette même forme de réalisation,
- la figure 4, illustre le système de basculement d'un dispositif de mesure selon cette même forme de réalisation,
- la figure 5, illustre une variante de réalisation du système de basculement,
- la figure 6, illustre une variante de réalisation des moyens de contrainte,
- la figure 7, illustre une variante de réalisation d'une tête de mesure comportant un capteur de déplacement à mesure confocale axial.

Des parties identiques, similaires ou équivalentes des différentes figures portent les mêmes références numériques de façon à faciliter le passage d'une figure à l'autre.

Les différentes possibilités (variantes et modes de réalisation) doivent être comprises comme n'étant pas exclusives les unes des autres et peuvent se combiner entre elles.

### EXPOSÉ DÉTAILLÉ DE MODES DE RÉALISATION PARTICULIERS

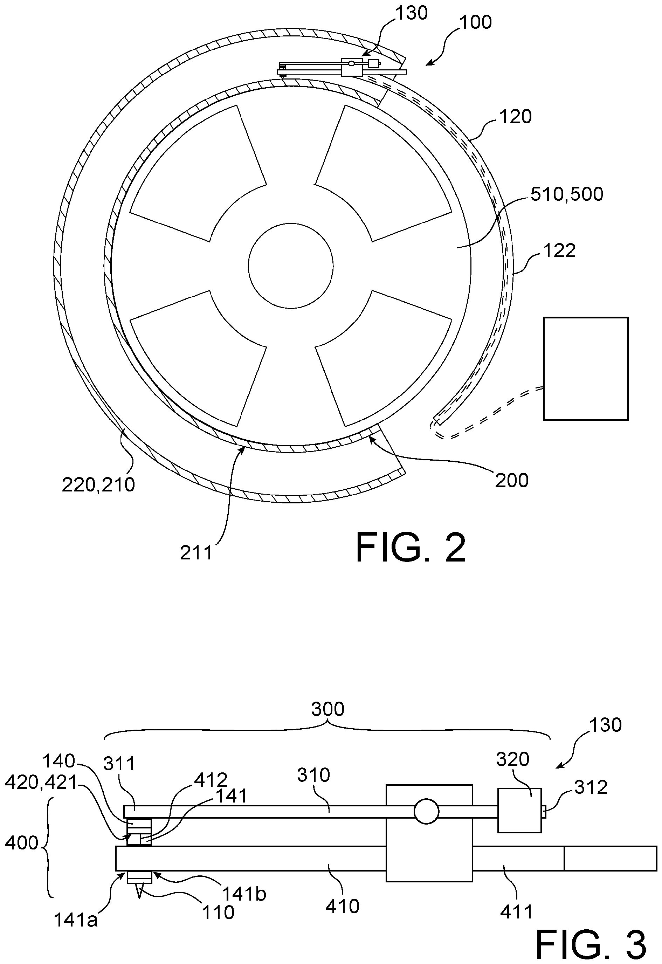

La figure 2 présente une forme de réalisation d'un dispositif 100 de mesure de l'état de surface d'une surface 200 selon l'invention lors de la mesure de l'état de surface de la surface 200 interne d'un tube 220 présentant une forme en portion de tore.

Un tel dispositif 100 comporte une tête de mesure 130.

La tête de mesure 130, comme illustrée sur la figure 3, comporte une sonde 110. La sonde 110 peut prendre la forme d'une pointe en matériau dur, tel que du diamant, du carbure de tungstène ou du carbure de silicium. La pointe, généralement de forme conique, présente un rayon de courbure de pointe le plus faible possible. Pour les applications de la mesure de l'état de surface de la surface 200 interne d'un tube 220, un rayon de pointe de l'ordre de 2µm est souhaitable.

La tête de mesure 130 comporte en outre un levier 310 monté pivotant sur la tête de mesure 130. Le levier 310 présente deux extrémités 311 et 312. La sonde 110 est montée à la première extrémité 311 du levier 310. Le levier 310 présente au niveau de sa seconde extrémité 312 une masselotte 320. La masselotte 320 est préférentiellement montée déplaçable le long du levier 310 de manière à permettre un réglage de la contrainte appliquée sur la sonde 110.

Le levier 310 et la masselotte 320 forment des moyens de contrainte 300 de la sonde 110 sur la surface 200.

La tête de mesure 130 peut comporter une cellule de force pour précisément mesurer la contrainte de la sonde 110 sur la surface 200. Cette cellule de force, non illustrée, forme un moyen de contrôle de la contrainte de la sonde 110 sur la surface 200.

Le montage de la sonde 110 sur le levier 310 est réalisé au moyen d'une pièce de support 140 présentant une cavité 141 traversante. La cavité 141 de la pièce de support 140 présente deux ouvertures 141a et 141b l'une en face de l'autre selon l'axe du levier 310. La cavité 141 présente sur une de ses parois 420, la paroi 420 la plus éloignée de la sonde 110, une surface réfléchissante 421.

La tête de mesure 130 comporte en outre un capteur 410 de mesure de déplacement à mesure confocale selon un principe identique à celui présenté sur la figure 1. Le capteur 410 présente un corps de capteur 411 sensiblement longitudinal. Le corps de capteur 411 est disposé selon un axe parallèle au levier 310 lorsque ce dernier est au repos. Le corps de capteur 411 est positionné sur la tête de mesure 130 de manière à ce que le corps de capteur 411 traverse la cavité 141.

Le capteur 410 est un capteur à mesure confocale de type radial, c'est-à-dire présentant un axe optique 412 de mesure perpendiculaire au corps 411 du capteur, et donc perpendiculaire au levier 310. L'axe optique 412 du capteur 410 est disposé de manière à ce que le rayonnement lumineux issu du capteur 410 soit réfléchi par la surface réfléchissante 421 de la cavité 141.

Le capteur 410 et la surface réfléchissante 421 forment les moyens de mesure du déplacement 400 de la sonde 110.

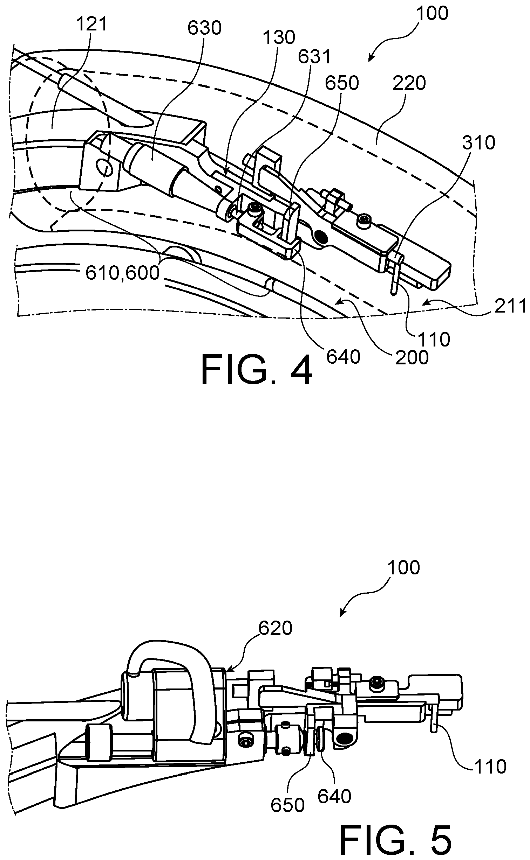

La tête de mesure 130 comporte en outre un système de basculement 610. Le système de basculement, tel qu'illustré sur la figure 4, comporte un vérin 630, une double butées 640 et un organe d'appui 650 faisant saillie du levier 310. La double butée 640 est disposée à l'extrémité mobile 631 du vérin 630 et entour l'organe d'appui 650. Ainsi, le levier 310 peut être déplacé entre une position engagée dans laquelle la sonde 110 est en contact avec la surface 200 et une position désengagée dans laquelle la sonde 110 est en retrait de la surface 200. La double butée 640 est configurée pour offrir une liberté de mouvement du levier 310 suffisante pour qu'en position engagée, le mouvement de la sonde 110 ne soit pas entravé.

Le système de basculement 610 forme un moyen de désengagement 600.

Le dispositif 100 comporte en outre un bras 120 présentant une extrémité libre 121. L'extrémité libre 121 supporte la tête de mesure 130. Le bras 120 permet le passage des câblages entre la tête de mesure 130 et le reste du dispositif 100. Le bras 120 présente une courbure 122 sensiblement identique à celle de la surface 200 à mesurer de manière à autoriser le déplacement de la surface 200 à mesurer relativement à la tête de mesure 130.

Le dispositif 100 comporte en outre une platine 510 support pour supporter le tube 220 à mesurer. Pour permettre la mesure de l'état de surface de la surface 200 interne du tube 220, la platine 510 présente une forme générale sensiblement circulaire, le tube 220 étant monté sur le périmètre extérieur 510 de la platine 510. La platine 510 est montée pivotante relativement à la sonde 110 de manière à ce que, lors du pivotement de la platine 510, la sonde 110 suive la courbure 211 de surface de la surface 200 interne du tube 220. La platine 510 est montée de manière à autoriser la pénétration du bras 120 dans le tube 220 et à ce que le tube 220 présente une trajectoire correspondant à la courbure 122 du bras 120.

Pour permettre une automatisation de la mesure, le montage de platine 510 est préférentiellement motorisé. Cette motorisation, dans un souci de fournir une mesure de l'état de surface qui soit fiable, peut être indexée. Cette indexation peut être réalisée par l'utilisation d'un codeur (non illustré).

La motorisation peut être configurée pour faire pivoter la platine sur un angle au moins égal à 100° et préférentiellement égal à 180°.

La platine 510 et son montage motorisé forment des moyens de déplacement relatif 500 de la sonde 110.

Ainsi lors de la mesure de l'état de surface de la surface 200 interne du tube 220, le tube 220 est placé sur la platine 510. Le platine 510 est ensuite pivotée de manière à placer la surface 200 interne du tube 220 en regard de la tête de mesure 130. Le levier 310 est ensuite positionné en position engagée par le système de désengagement 610. Dans cette position, la sonde 110 est contrainte par la masselotte 320 sur la surface 200. La cellule de force permet de mesurer la contrainte exercée par la masselotte 320 et de précisément régler la contrainte par le placement de la masselotte 320.

Une fois la contrainte exercée par masselotte 320 réglée, la platine 510 est pivotée pour permettre à la sonde 110 de parcourir la génératrice 211 du tube 220. Ainsi, la sonde 110 est déplacée uniquement le long de la génératrice 220. Tout au long de ce déplacement, le capteur 410 de déplacement à mesure confocale permet d'enregistrer les déplacements de la sonde 110 selon l'axe perpendiculaire à la surface 200 interne du tube 220. Ainsi, l'enregistrement de ces déplacements permet d'obtenir un profil de la génératrice 211 interne du tube 220 sans artefact lié à la forme du tube 220.

Selon une première variante de réalisation, illustrée sur la figure 5, le système de basculement 610 du levier 310 peut comporter un micro-manipulateur 620. Un dispositif 100 selon cette variante de réalisation se différencie du mode de réalisation précédemment décrit en ce que le vérin 630 est remplacé par un micro-manipulateur 620 et en ce que la double-butée 640 est montée sur le micro-manipulateur 620.

Ainsi, avec un tel micro-manipulateur 620, le levier 310 peut être précisément déplacé entre la position engagée et la position désengagée avec la possibilité de positionner le levier 310 en une position intermédiaire pour compenser les éventuelles variations au niveau des dimensions et du positionnement du tube 220 à mesurer.

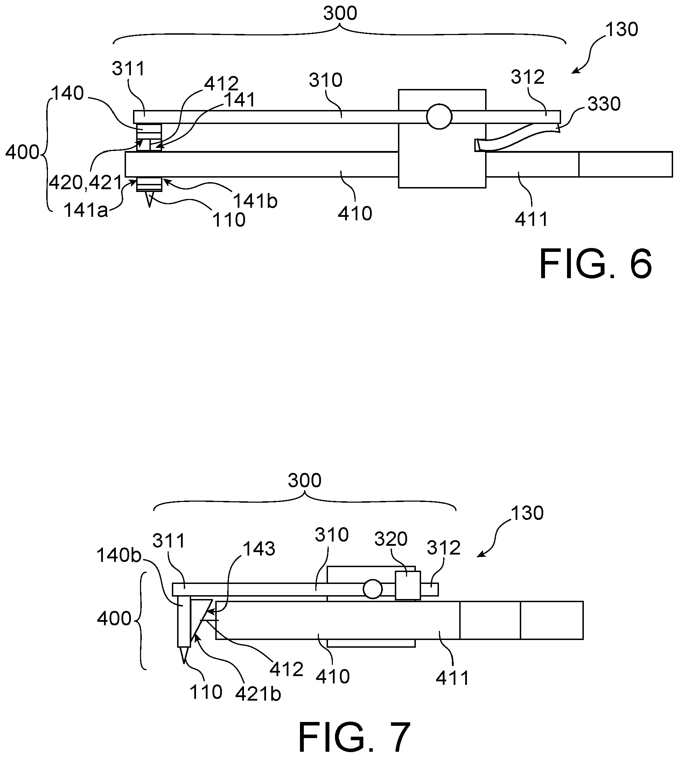

Selon une autre variante de réalisation, partiellement illustrée sur la figure 6. Le dispositif 100 peut être adapté pour mesurer l'état de surface le long d'une génératrice quelconque du tube 220. Un dispositif 100 selon cette variante de réalisation se différencie d'un dispositif selon le mode ou la variante de réalisation précédemment décrits en ce qu'un moyen de rappel élastique 330 contraint, en lieu et place de la masselotte 320, la sonde 110 sur la surface 200 et en que le bras 120 comporte à son extrémité libre 121 une portion pivotante (non illustrée) autour d'un axe tangentiel à la courbure 122 du bras 120, cette portion pivotante supportant la tête de mesure 130.

Ainsi, le moyen de rappel élastique 330 (par exemple une lame formant ressort) permet de contraindre la sonde 110 sur la surface 200 sans action de la gravité. Il en résulte que la génératrice le long de laquelle la mesure de l'état de surface est réalisée n'est pas forcément la génératrice 211 interne, la contrainte n'étant plus forcement dirigée vers le bas.

La mesure de l'état de surface d'une surface 200 avec un dispositif 100 selon cette variante de réalisation se différencie de celle du mode de réalisation précédemment décrit en ce qu'il est nécessaire avant de positionner le levier 310 en position engagée, de faire pivoter la portion pivotante de manière à placer la sonde 110 le long de la génératrice du tube 220 souhaitée pour la mesure de l'état de surface.

Selon une autre variante de réalisation illustrée sur la figure 7, le capteur 410 de déplacement à mesure confocale est un capteur 410 de déplacement à mesure confocale axial, c'est-à-dire présentant un axe optique 412 dans le prolongement du corps de capteur 411. Un dispositif 100 selon cette variante de réalisation se différencie d'un dispositif selon le mode ou les variantes de réalisation précédemment décrits en ce qu'en outre la sonde 110 est montée sur le levier 310 au moyen d'une pièce de support 140b ne présentant pas de cavité ouverte et comportant un plan incliné 143 dont la surface 421b, en regard du capteur 410 de déplacement à mesure confocale, est réfléchissante. Le plan incliné 143 est incliné du milieu du levier 310 en direction de sa première extrémité libre 311 et du levier 310 en direction de la surface 200.

Ainsi, les déplacements de la sonde 110 perpendiculaire au corps de capteur 411 engendre un déplacement du plan incliné 143 selon la même direction. Ce déplacement décale le point d'intersection entre le plan incliné 143 et l'axe optique 412 du capteur. Ce décalage, une fois enregistré par le capteur 410 de déplacement à mesure confocale permet alors de remonter au déplacement de la sonde 110. Une telle configuration offre une meilleure intégration à la tête de mesure 130 du capteur 410 de déplacement à mesure confocale, limitant ainsi l'encombrement volumique de la tête de mesure 130.

Si dans le mode et les variantes de réalisation du dispositif 100 décrits ci-dessus, les moyens de mesure du déplacement 400 de la sonde 110 comportent un capteur de déplacement à mesure confocale, le dispositif peut également comporter un capteur de déplacement d'un autre type, qu'il soit optique ou non, sans que l'on sorte du cadre de l'invention.

De même, si le mode et les variantes de réalisation du dispositif 100 décrits ci-dessus sont adaptés à la mesure de l'état de surface de la surface 200 interne d'un tube 220 en forme de portion de tore, le dispositif 100 peut être adapté pour la mesure de l'état de surface le long d'une surface d'un autre type sans que l'on sorte du cadre de l'invention, si celle-ci comporte au moins une portion présentant une courbure de surface. Dans cette configuration la platine et son montage sont adaptés pour permettre un mouvement le long de cette courbure de la surface.

De même, si selon le mode et les variantes de réalisation du dispositif 100 décrits ci-dessus, la surface 200 est déplacée le long de la sonde 110, la surface 200 peut être fixe sans que l'on sorte du cadre de l'invention. Dans cette configuration, c'est la tête de mesure qui est montée mobile au moyen, par exemple, d'un rail de manière à suivre la courbure de surface.

Selon une possibilité non illustrée, le dispositif 100 peut comporter un système de pivotement de la sonde 110 de manière à ce que cette dernière puisse être déplacée transversalement le long de la surface interne du tube 220. Ainsi, le système de pivotement permet, après avoir vérifié l'état de surface le long d'une première génératrice 211 du tube 220, de pivoter la sonde 110 pour permettre la mesure le long d'une autre génératrice du tube 220. Le système de pivotement est préférentiellement adapté pour faire pivoter la sonde 110 sur 360° donnant ainsi accès à l'ensemble des génératrices du tube 220.

Ainsi, lors de la caractérisation d'un tube 220, le dispositif 100 peut être configuré, par exemple, pour faire des mesures d'état successives le long de quatre génératrices disposées à 90° les unes des autres, la sonde étant pivotée de 90° entre chacune des mesures.

Un tel système de pivotement forme un moyen de rotation de la sonde 110 adapté pour déplacer la sonde 110 en rotation le long de la surface interne du tube 220 de manière à changer la génératrice 211 le long de laquelle la sonde 110 est déplacée relativement par les moyens de déplacement relatif 500.

### Références citées

[1] http://www.stilsa.com/EN/pdf/optical%20principles%2 0CCS.pdf

## Revendications

1. Dispositif (100) de mesure de l'état de surface d'une surface (200), ladite surface comprenant au moins une portion (210) présentant une courbure (211) de surface, le dispositif (100) comportant :
- une tête de mesure (130),
- une sonde (110) destinée à être en contact avec ladite portion (210) de surface,
- des moyens de contrainte (300) destinés à contraindre la sonde (110) sur la surface (200) avec une contrainte sensiblement constante, la sonde (110) étant montée sur la tête de mesure (130) par l'intermédiaire desdits moyens de contrainte (300)
- des moyens de mesure du déplacement (400) de la sonde (110) agencés pour mesurer le déplacement de la sonde (110) le long d'un axe sensiblement perpendiculaire à la surface (200),
- des moyens de déplacement relatif (500) de la tête de mesure et de la sonde (110) distincts des moyens de contrainte (300),
- une platine pour supporter ladite surface,
le dispositif **étant caractérisé en ce que** les moyens de déplacement relatif (500) de la tête de mesure et de la sonde sont adaptés pour déplacer la tête de mesure (130) (110) relativement à la platine selon une trajectoire unique, ladite trajectoire unique correspondant à la courbure (211) de surface,
dans lequel le dispositif (100) est destiné en particulier à la mesure de l'état de surface de la surface (200) interne d'un tube (220) présentant une forme sensiblement en portion de tore, les moyens de déplacement relatif (500) étant adaptés pour déplacer relativement la tête de mesure (130) et la sonde (110) le long d'une génératrice (211) interne du tube (220), ladite génératrice formant la courbure (211) de surface, et
dans lequel les moyens de déplacement relatif (500) de la sonde (110) comporte une platine (510) pour supporter le tube (220), la platine (510) étant montée pivotante relativement à la tête de mesure et à la sonde (110) de manière à autoriser le déplacement relatif de la tête de mesure (130 le long de la génératrice (211).

2. Dispositif (100) selon la revendication 1, dans lequel le montage pivotant de la platine (510) est motorisé, préférentiellement avec un déplacement indexé.

3. Dispositif (100) selon la revendication 1 ou 2, dans lequel le dispositif (100) comporte en outre un bras (120) comportant une extrémité libre (121) supportant la tête de mesure (130), le bras (120) présentant une courbure (122) identique à celle de la portion de tore de manière à autoriser le déplacement relatif de la tête de mesure le long de la génératrice (211).

4. Dispositif (100) selon l'une quelconque des revendications précédentes, dans lequel il est en outre prévu un moyen de rotation de la tête de mesure (130) et de la sonde (110) adapté pour déplacer la tête de mesure (130) en rotation le long de la surface interne du tube (220) de manière à changer la génératrice (211) le long de laquelle la tête de mesure est déplacée relativement par les moyens de déplacement relatif (500).

5. Dispositif (100) selon l'une quelconque des revendications précédentes, dans lequel les moyens de mesure du déplacement (400) comportent un capteur (410) de déplacement du type optique, le capteur étant préférentiellement un capteur (410) de déplacement à mesure confocale.

6. Dispositif (100) selon l'une quelconque des revendications précédentes, dans lequel les moyens de contrainte (300) comportent un levier (310) monté pivotant et au bout duquel est disposé la sonde (110), le levier (310) comportant une masselotte (320) de manière à contraindre la sonde (110) sur la surface par l'action de la gravité, la masselotte (320) étant préférentiellement déplaçable le long du levier (310).

7. Dispositif (100) selon l'une quelconque des revendications 1 à 5, dans lequel les moyens de contrainte (300) comportent un moyen de rappel élastique (330) agencé pour appliquer une force de rappel sur la sonde (110) de façon à contraindre la sonde (110) sur la surface (200).

8. Dispositif (100) selon les revendications 3 et 7, dans lequel le bras (120) comporte à son extrémité libre (121) une portion pivotante, la portion pivotante étant agencée pour pivoter autour d'un axe tangentiel à la courbure (122) du bras (120) et la sonde (110) étant supportée par ladite portion pivotante.

9. Dispositif (100) selon l'une quelconque des revendications 6 à 8, dans lequel les moyens de contrainte (300) comportent en outre un moyen de contrôle de la contrainte de la sonde sur la surface (200).

10. Dispositif (100) selon la revendication 9, dans lequel le dispositif (100) comporte en outre un moyen de désengagement (600) agencé pour éloigner la sonde (110) de la surface (200).

11. Dispositif (100) selon la revendication 10, dans lequel les moyens de contrainte (300) comportent un levier (310) monté pivotant au bout duquel est montée la sonde (110) et le moyen de désengagement (600) est formé par un système de basculement (610) du levier (310).

12. Dispositif (100) selon la revendication 11, dans lequel le système de basculement (610) du levier (310) comporte un manipulateur micrométrique (620) préférentiellement du type piézo-électrique.

## Patentansprüche

1. Vorrichtung (100) zum Messen des Oberflächenzustands (200) einer Oberfläche (200), wobei die Oberfläche zumindest einen Abschnitt (210) mit einer Oberflächenkrümmung (211) aufweist, wobei die Vorrichtung (1090) enthält:
- einen Messkopf (130),
- eine Sonde (110), die mit dem Oberflächenabschnitt (210) in Kontakt gelangen soll,
- Vorspanneinrichtungen (300), die dazu bestimmt sind, die Sonde (110) mit einer im Wesentlichen konstanten Vorspannung auf die Oberfläche (200) vorzuspannen, wobei die Sonde (110) über die Vorspanneinrichtungen (300) am Messkopf (130) angebracht ist,
- Verlagerungsmesseinrichtungen (400) zum Messen der Verlagerung der Sonde (110), die dazu vorgesehen sind, die Verlagerung der Sonde (110) entlang einer im Wesentlichen senkrecht zur Oberfläche (200) verlaufenden Achse zu messen,
- Relativverlagerungseinrichtungen (500) zum relativen Verlagern des Messkopfs und der Sonde (110), die von den Vorspanneinrichtungen (300) separat vorliegen,
- eine Platte zum Tragen der Oberfläche,
wobei die Vorrichtung **dadurch gekennzeichnet ist, dass** die Relativverlagerungseinrichtungen (500) zum relativen Verlagern von Messkopf und Sonde dazu ausgelegt sind, den Messkopf (130) (110) relativ zur Platte entlang einer Einwegbahn zu verlagern, wobei die Einwegbahn der Oberflächenkrümmung (211) entspricht,
wobei die Vorrichtung (100) insbesondere zum Messen des Oberflächenzustands der Innenfläche (200) eines Rohres (220) bestimmt ist, das im Wesentlichen in Form eines Torusabschnitts vorliegt, wobei die Relativverlagerungseinrichtungen (500) dazu ausgelegt sind, den Messkopf (130) und die Sonde (110) entlang einer inneren Mantellinie (211) des Rohres (220) relativ zu verlagern, wobei die Mantellinie die Oberflächenkrümmung (211) bildet, und
wobei die Relativverlagerungseinrichtungen (500) zur relativen Verlagerung der Sonde (110) eine Platte (510) zum Tragen des Rohres (220) enthalten, wobei die Platte (510) relativ zum Messkopf und zur Sonde (110) verschwenkbar gelagert ist, so dass sie die relative Verlagerung des Messkopfs (130) entlang der Mantellinie (211) gestattet.

2. Vorrichtung (100) nach Anspruch 1, wobei die verschwenkbare Lagerung der Platte (510) motorisiert, vorzugsweise mit indexierter Verlagerung, erfolgt.

3. Vorrichtung (100) nach Anspruch 1 oder 2, wobei die Vorrichtung (100) ferner einen Arm (120) mit einem freien Ende (121) enthält, das den Messkopf (130) trägt, wobei der Arm (120) eine Krümmung (122) identisch zu der des Torusabschnitts aufweist, so dass er die relative Verlagerung des Messkopfs entlang der Mantellinie (211) gestattet.

4. Vorrichtung (100) nach einem der vorangehenden Ansprüche, wobei ferner eine Einrichtung zum Drehen des Messkopfs (130) und der Sonde (150) vorgesehen ist, die dazu ausgelegt ist, den Messkopf (130) entlang der Innenfläche des Rohres (220) drehend zu verlagern, so dass die Mantellinie (211) geändert wird, entlang welcher der Messkopf über die Relativverlagerungseinrichtungen (500) relativ verlagert wird.

5. Vorrichtung (100) nach einem der vorangehenden Ansprüche, wobei die Verlagerungsmesseinrichtungen (400) einen Bewegungssensor (410) vom optischen Typ enthalten, wobei der Sensor vorzugsweise ein Bewegungssensor (410) für konfokale Messung ist.

6. Vorrichtung (100) nach einem der vorangehenden Ansprüche, wobei die Vorspanneinrichtungen (300) einen Hebel (310) enthalten, der verschwenkbar gelagert ist und an dessen Ende die Sonde (110) angeordnet ist, wobei der Hebel (310) ein Ausgleichsgewicht (320) aufweist, so dass die Sonde (110) durch Wirkung der Schwerkraft auf die Oberfläche vorgespannt wird, wobei das Ausgleichsgewicht (320) vorzugsweise entlang des Hebels (310) verlagerbar ist.

7. Vorrichtung (100) nach einem der Ansprüche 1 bis 5, wobei die Vorspanneinrichtungen (300) ein elastisches Rückstellmittel (330) enthalten, das dazu angeordnet ist, eine Rückstellkraft auf die Sonde (110) auszuüben, so dass die Sonde (110) auf die Oberfläche (200) vorgespannt wird.

8. Vorrichtung (100) nach den Ansprüchen 3 und 7, wobei der Arm (120) an seinem freien Ende (121) einen Schwenkabschnitt enthält, wobei der Schwenkabschnitt dazu angeordnet ist, um eine Achse tangential zur Krümmung (122) des Arms (120) zu verschwenken und wobei die Sonde (110) von dem Schwenkabschnitt getragen wird.

9. Vorrichtung (100) nach einem der Ansprüche 6 bis 8, wobei die Vorspanneinrichtungen (300) ferner eine Kontrolleinrichtung zum Kontrollieren der Vorspannung der Sonde auf die Oberfläche (200) enthalten.

10. Vorrichtung (100) nach Anspruch 9, wobei die Vorrichtung (100) ferner eine Löseeinrichtung (600) enthält, die dazu angeordnet ist, die Sonde (100) von der Oberfläche (200) wegzubringen.

11. Vorrichtung (100) nach Anspruch 10, wobei die Vorspanneinrichtungen (300) einen Hebel (310) enthalten, der verschwenkbar gelagert ist und an dessen Ende die Sonde (110) angebracht ist und wobei die Löseeinrichtung (600) aus einem Kippsystem (610) zum Kippen des Hebels (310) gebildet ist.

12. Vorrichtung (100) nach Anspruch 11, wobei das Kippsystem (610) zum Kippen des Hebels (310) eine mikrometrische Betätigungseinrichtung (620) vorzugsweise vom piezoelektrischen Typ enthält.

## Claims

1. A device (100) for measuring the surface state of a surface (200), said surface comprising at least one portion (210) having a surface curvature (211), the device (100) including:
- a measurement head (130),
- a probe (110) for being in contact with said surface portion (210),
- stressing means (300) for stressing the probe (110) on the surface (200) with a substantially constant stress, the probe (110) being mounted on the measurement head (130) through said stressing means (300),
- displacement measuring means (400) for measuring the displacement of the probe (110) which are arranged to measure the displacement of the probe (110) along an axis substantially perpendicular to the surface (200),
- relative displacing means (500) for relatively displacing the probe (110),
- turntable for supporting the tube (220),
the device being **characterised in that** the means (500) for relatively displacing the measurement head (130) and of the sonde being suitable for displacing the probe (110) in relation to the surface (200) along a unique path, said unique path corresponding to the surface curvature (211),
wherein the device (100) is intended in particular for measuring the surface state of the inner surface (200) of a tube (220) having a substantially torus portion shape, the relative displacing means (500) being suitable for relatively displacing the probe (110) along an inner generatrix (211) of the tube (220), said generatrix forming the surface curvature (211). and
wherein the means (500) for relatively displacing the probe (110) include a turntable (510) for supporting the tube (220), the turntable (510) being pivotably mounted in relation to the probe (110) so as to allow the relative displacement of the probe (110) along the generatrix (211).

2. The device (100) according to claim 1, wherein the pivoting mounting of the turntable (510) is motorized, preferentially with an indexed displacement.

3. The device (100) according to claim 1 or 2, wherein the device (100) further includes an arm (120) including a free end (121) supporting the probe (110), the arm (120) having a curvature (122) identical to that of the torus portion so as to allow the relative displacement of the probe (110) along the generatrix (211).

4. The device (100) according to any of the preceding claims, wherein it is further provided means for rotating the probe (110) suitable for rotatably displacing the probe (110) along the inner surface of the tube (220) so as to change the generatrix (211) along which the probe (110) is relatively displaced by the relative displacement means (500).

5. The device (100) according to any of the preceding claims, wherein the displacement measuring means (400) include an optical type displacement sensor (410), the sensor being preferentially a confocal measurement displacement sensor (410).

6. The device (100) according to any of the preceding claims, wherein the stressing means (300) include a pivotably mounted lever (310) and at the end of which is provided the probe (110), the lever (310) including a counterweight (320) so as to stress the probe (110) on the surface by the action of gravity, the counterweight (320) being preferentially displaceable along the lever (310).

7. The device (100) according to one of claims 1 to 5, wherein the stressing means (300) include elastic return means (330) arranged to apply a return force to the probe (110) so as to stress the probe (110) on the surface (200).

8. The device (100) according to claims 3 and 7 wherein the arm (120) includes at its free end (121) a pivoting portion, the pivoting portion being arranged to pivot about an axis tangential to the curvature (122) of the arm (120) and the probe (110) being supported by said pivoting portion.

9. The device (100) according to one of claims 6 to 8, wherein the stressing means (300) further include means for monitoring the stress of the probe on the surface (200).

10. The device (100) according to claim 9, wherein the device (100) further includes disengaging means (600) arranged to move the probe (110) away from the surface (200).

11. The device (100) according to claim 12, wherein the stressing means (300) include a pivotably mounted lever (310) at the end of which is mounted the probe (110) and the disengaging means (600) is formed by a system (610) for swinging the lever (310).

12. The device (100) according to claim 11, wherein the system (610) for swinging the lever (310) includes a micromanipulator (620) preferentially of the piezoelectric type.
